# EUROPEAN PATENT SPECIFICATION

(11) **EP 0 602 782 B1**
(45) Date of publication and mention of the grant of the patent: **14.05.1997**
(21) Application number: 93308575.5
(22) Date of filing: 27.10.1993
(51) Int. Cl.: H01M 10/40, H01M 4/58, H01M 4/48

(54) **Secondary battery**
Sekundärbatterie
Batterie secondaire

(30) Priority: 19.11.1992 JP 335660/92
(43) Date of publication of application: 22.06.1994
(73) Proprietor: SANYO ELECTRIC CO., LIMITED., Moriguchi City, Osaka (JP)
(72) Inventor: Fujimoto, Masahisa, Osaka (JP); Nishio, Koji, Osaka (JP); Saitoh, Toshihiko, Osaka (JP)
(74) Representative: Allman, Peter John

(56) References cited:
- EP-A- 0 309 171
- WO-A-88/03331
- DE-A- 3 231 243
- DE-A- 3 918 963
- US-A- 4 707 423
- US-A- 4 894 302
- PATENT ABSTRACTS OF JAPAN vol. 14, no. 16 (E-872)12 January 1989 & JP-A-01 258 410 (MORIMOTO TAKESHI)
- PATENT ABSTRACTS OF JAPAN vol. 15, no. 9 (E-1021)9 January 1991 & JP-A-02 262 241 (FURUKAWA BATTERY CO LTD)

## Description

### BACKGROUND OF THE INVENTION

### 1. Field of the invention

This invention relates to a secondary battery, and more particularly to an improved ion conductive material for an active material to be used in a secondary battery.

### 2. Description of the prior art

Currently, a negative electrode having carbon compositions for a secondary battery using lithium provides certain advantages. For example, such secondary battery has a higher capacity than a Ni-Cd battery. Carbon compositions have superior discharge capacities and secondary batteries employing such compositions do not have to be charged over and over again. Also, such secondary batteries can discharge for a long period on one charging; therefore, they are energy-saving batteries.

However, in order to achieve more superior characteristics, a secondary battery having an even higher capacity is needed.

### SUMMARY OF THE INVENTION

Accordingly, a primary object of the present invention is to provide a secondary battery with improved battery charactyeristics, such as improved discharge capacity.

Another object of the present invention is to provide a secondary battery with improved discharge voltage.

In accordance with a first aspect of the present invention there is provided secondary battery comprising:
a positive electrode having a material intercalating alkali earth metal ions reversibly;
a negative electrode having a carbon composition intercalating alkali earth metal ions reversibly; and
an electrolyte having an organic solvent and a solute, said solute including an alkali earth metal salt,
   (i) said material is selected from a group consisting of BaNiO₃, BaNiO₂, BaCoO₃, BaCoO_{2.8}, BaFeO₃, SrNiO₃, SrCoO_{2.5}, SrCoO_{2.8}, SrCoO₃, SrFeO₄, SrFeO_{2.5}, SrFeO₃, CaCo₂O₄, Ca₃Co₄O₉, Ca₂Co₂O₅, Ca₃Co₂O₆, CaFeO₃, CaFeO₂, MgNiO₂, MgCo₂O₄ and MgFe₂O₄;
   (ii) said solute is selected from a group consisting of Ba(BF₄)₂, Ba(CF₃SO₃)₂, Ba(PF₆)₂, Ba(ClO₄)₂, Ba(AsF₆)₂, Ba(SbF₆)₂, Sr(BF₄)₂, Sr(CF₃SO₃)₂, Sr(PF₆)₂, Sr (ClO₄)₂, Sr(AsF₆)₂, Sr(SbF₆)₂, Ca(BF₄)₂, Ca(CF₃SO₃)₂, Ca(PF₆)₂, Ca(ClO₄)₂, Ca(AsF₆)₂, Ca(SbF₆)₂, Mg(BF₄)₂, Mg(CF₃SO₃)₂, Mg(PF₆)₂, Mg(ClO₄)₂, Mg(AsF₆)₂ and Mg(SbF₆)₂;
   (iii) said organic solvent is selected from a group consisting of ethylene carbonate (EC), dimethyl carbonate (DMC) and vinylene carbonate (VC); and
   (iv) said carbon composition is selected from a group consisting of coke, refined coke with 99% or more purity, organic compound produced by calcined cellulose, graphite and glassy carbon.

In accodance with a second aspect of the present invention there is provided a secondary battery, comprising:
a positive electrode having a material intercalating lanthanoid metal ions reversibly;
a negative electrode having a carbon composition intercalating lanthanoid ions reversibly; and
an electrolyte having an organic solvent and a solute, said solute including a lanthanoid metal salt, wherein
   (i) said material is selected from a group consisting of BaSmNiO₅, SmMnO₃, Sm₃Fe₅O₁₂, BaEu₂NiO₅, EuFeO₃, EuFe₅O₁₂, EuMnO₃, EuYbFe₂O₄, LaNiO₃, La₂CoO₄, LaNi_{0.6}Co_{0.4}O₃, LaMnO_{4.15}, La₄Mn₄O₁₁, LaMnO₃, La Mn₇O₁₂ and LaMnO_{3.15};
   (ii) said solute is selected from a group consisting of Sm(BF₄)₃, Sm(CF₃SO₃)₃, Sm(PF₆)₃, Sm(ClO₄)₃, Sm(AsF₆)₃, Sm(SbF₆)₃, Eu(BF₄)₃, Eu(CF₃SO₃)₃, Eu(PF₆)₃, Eu(ClO₄)₃, Eu(AsF₆)₃, Eu(SbF₆)₃, Yb(BF₄)₃, Yb(CF₃SO₃)₃, Yb(PF₆)₃, Yb(ClO₄)₃, Yb(AsF₆)₃, Yb(SbF₆)₃, La(BF₄)₃, La(CF₃SO₃)₃, La(PF₆)₃, La(ClO₄)₃, La(AsF₆)₃ and La(SbF₆)₃;
   (iii) said organic solvent is selected from a group consisting of ethylene carbonate (EC), dimethyl carbonate (DMC) and vinylene carbonate (VC); and
   (iv) said carbon composition is selected from a group consisting of coke, refined coke with 99% or more purity, organic compound produced by calcined cellulose, graphite and glassy carbon.

According to a third aspect of the present invention there is provided a secondary battery having an average discharge voltage of about 4.0 V, comprising:
a positive electrode having a material intercalating alkali earth metal ions reversibly, said material being selected from a group consisting of BaFeO₃, SrFeO₃, CaFeO₃ and CaFeO₂;
a negative electrode having a carbon composition intercalating alkali earth metal ions reversibly; and
an electolyte having an organic solvent and a solute, said solute including an alkali earth metal salt, said solute being composed of ClO₄²⁻ ions and cations.

The carbon composition for the negative electrode may be selected from a group consisting of coke, refined coke with 99% or more purity, organic compound produced by calcined cellulose, graphite and glassy carbon.

Graphite is one of the more suitable materials for the negative electrode because the amount of intercalating and deintercalating alkali earth metal ions or lanthanoid ions is larger.

The graphite preferablyhas an average granule size ranging from 1 µm to 30 µm, a "d" value (d₀₀₂) of a crystal face (002) evaluated by x-rays diffraction ranging from 3.35 to 3.40 and a size of crystallite for a c-axis direction tested by x-rays diffraction being larger than 150 Å.

The organic solvent may be selected from a group consisting of ethylene carbonate (EC), dimethyl carbonate (DMC) and vinylene carbonate (VC). Preferably, the organic solvent is composed of a mixture of ethylene carbonate (EC ) and dimethyl carbonate (DMC).

### BRIEF DESCRIPTION OF THE DRAWINGS

These and other objects, advantages and features of the invention will become apparent from the following description thereof taken in conjunction with the accompanying drawings which illustrate specific embodiments of the invention. In the drawings:

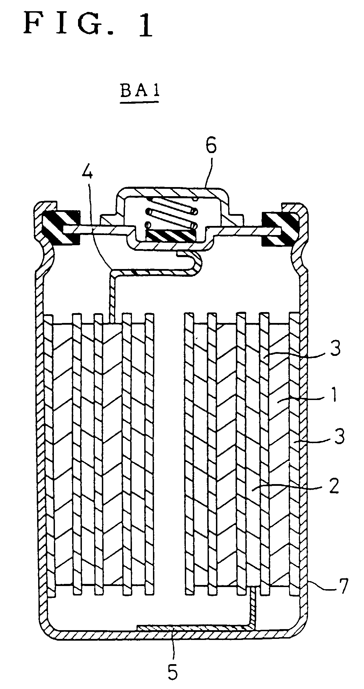

FIG.1 is a cross-sectional view of a secondary battery in accordance with one exemplary embodiment of the present invention, and
FIG.s 2-9 are graphs showing the relationship between discharge capacity and battery voltage of various embodiments of the present invention.

### DETAILED DESCRIPTION OF THE PREFERRED EMBODIMENTS

The following detailed description is believed to be of the best presently contemplated mode of carrying out the invention. This description is not to be taken in a limiting sense, but is made merely for the purpose of illustrating general principles of the invention. The scope of the invention is best defined by the appended claims.

In the present invention, an ion conductive agent is composed of an alkali earth metal ion (Ba²⁺, Sr²⁺, Ca²⁺, Mg²⁺ ) or a lanthanoid metal ion (Eu³⁺, Yb³⁺, Sm³⁺, La³⁺ or the like). An ion conductive agent for a secondary battery in accordance with the present invention is used for several reasons: Charge of the alkali earth metal ion or the lanthanoid metal ion is twice or three times larger than that of lithium ion. An electrochemical equivalent of either the alkali earth metal ion or the lanthanoid metal ion is half or one-third smaller than that of a lithium ion, respectively. Therefore, the capacity of the secondary battery using those ions for an ion conductive agent will twice or three times larger than that of using lithium.

It is known that alkali earth metal ions are chemically intercalated into carbon compound. However, it has not been known that the alkali earth metal ions are electrochemically intercalated into carbon compounds. This is because an electrolyte having a superior conductivity is required in order to intercalate alkali earth metal ions into carbon compounds. It was thought that no suitable electrolyte was available.

In the present invention, either an alkali earth ion or a lanthanoid metal ion is limited for an ion conductive agent among 2+ charged and 3+ charged metal ions. A reason of the limitation is based on that oxidation-reduction potential of both the alkali earth ion and the lanthanoid metal ion is baser than that of another 2+ charged or 3+ charged metal ions. As a result, a battery with higher capacity will be obtained.

The above positive electrode materials may be mixed with a binder, for example, polytetrafluoroethylene (PTFE) and polyvinylidenfluoride (PVdF) and a conductive agent, for example, acetylene black, carbon black and graphite, so as to provide a mixture for the positive electrode.

In one embodiment of the present invention, a carbon composition for a negative electrode which intercalates either alkali earth metal ions or lanthanoid metal ions reversibly may be formed, for example, by coke, preferably, refined coke with the purity of 99% or more, organic compounds produced by calcined cellulose, graphite or glassy carbon. It is appreciated that these carbon compositions have a porous structure. In accordance with one aspect of the invention, they may be used independently, or two or more of them may be mixed together. Graphite may be one of the most suitable materials for the negative electrode, because either alkali earth metal ions or lanthanoid metal ions have both large intercalating and deintercalating capacities as an active material.

More preferably, the graphite would have the following characteristics:
1) an average granule size = 1 - 30 µm,
2) a "d" value (d₀₀₂) of a crystal face (002) evaluated by X-rays diffraction = 3.35 - 3.40,
3) a size of crystallite for a C-axis direction tested by X-rays diffraction = more than 150 Å,
4) a value of specific surface area measured by a BET method = 0.5 - 50 m²/gram, and
5) a value of a real density = 1.9 - 2.3 gram/cm³.

The carbon composition is mixed with a binder, such as for example, polytetrafluoroethylene (PTFE) and polyvinylidenfluoride (PVdF) to obtain a mixture for a negative electrode.

As for a combination of a solute and a positive electrode material, the solute needs to involve a cation composed of either an alkali earth metal or a lanthanoid metal for the positive electrode material. For example, using BaNiO₃ for the positive electrode material, Ba(ClO₄)₂, Ba(BF₄)₂, Ba(CF₃SO₃)₂, Ba(PF₆)₂, Ba(AsF₆)₂ or Ba(SbF₆)₂ may be used for the solute because those are composed of Ba²⁺ cations.

In one aspect of the present invention, an electrolyte includes an organic solvent, for example, ethylene carbonate (EC), dimethyl carbonate (DMC) and vinylene carbonate (VC). In accordance with one embodiment of the present invention, a mixture of those solvents may be used. The organic solvent may include vinylene carbonate and its derivatives. The vinylene carbonate derivatives may be obtained by replacing at least one of hydrogen atoms of vinylene carbonate by a methyl group, an ethyl group or one halogen atom. It is noted that an organic solvent used or proposed in a conventional secondary battery for an electrolyte may be applicable. In one embodiment of the present invention, a concentration of the solute in the electrolyte is ranging from 0.7 M to 1.5 M, preferably 1 M.

### EXAMPLE 1

### {A secondary battery "BA1" of the present invention}

A method of preparing a positive electrode will first be described. BaNiO₃ is mixed with graphite powder as a conductive agent in a weight ratio of 95:5 to obtain a mixture. The mixture is dispersed in a polyimide resin, linear condensated polyimide macromolecules ("TORAY" TORAYNEECE #3000), with N-methyl-2-pyrrolidone (NMP) as a binder solution to obtain slurry. The slurry is kneaded and then coated by Dr. blade method onto one side of a conductive plate of thin aluminum foil to obtain an electrode plate. Then, the electrode plate is then dried at 60°C under a vacuum condition to evaporate NMP. On the other side of the conductive plate the slurry is coated, and dried in the same way. The polyimide resin is used in 2 parts weight compared to 100 parts weight of the mixture. Last, the plate is heat-treated at a 350°C temperature for 20 hours to obtain a positive electrode.

A negative electrode may be prepared in the following manner. First, natural graphite powder (a purity of 99% and an average granule size of 12 µm) is mixed with a binder solution to obtain a slurry. Second, the slurry is coated onto a current collector comprising a thin copper plate to obtain an electrode plate. Then, the electrode plate is dried and heated to obtain a graphite layer with a 50 µm thickness. In the negative electrode, the binder is used in 0.5 parts weight in comparison with the natural graphite powder of 100 parts weight.

Ethylene carbonate (EC) and dimethyl carbonate (DMC) are mixed to form an organic solvent mixture. An alkali earth metal salt (Ba(ClO₄)₂) is dissolved into the solvent mixture in a concentration of 1 mole/liter to provide a non-aqueous electrolyte. In the electrolyte, a volume ratio of EC to DME is preferably set at 1:1.

As shown in FIG.1, the battery "BA1" of the present invention has a positive electrode 1 and a negative electrode 2. These electrodes 1 and 2 are separated by a separator 3 impregnated with the non-aqueous electrolyte. The separator 3 is typically formed from an ion permeative porous polypropylene thin film (for example, "Cellgard 3401", made by Hoechst Celanese Co. Ltd.). The positive electrode 1, the negative electrode 2 and the separator 3 are coiled into a roll, and the roll is placed in an outer case 7. The positive electrode 1 is connected to a positive terminal 6 through a lead plate 4. The negative electrode 2 is connected to the outer case 7 through a lead plate 5. The battery "BA1" typically has a cylindrical shape. In a preferred embodiment, the diameter and the height of the battery "BA1" are 14.22 mm and 50 mm, respectively.

### EXAMPLES 2-9

### {Secondary batteries "BA2 - BA9" of the present invention}

All of the elements of batteries "BA2 - BA9", except for the positive electrode and solute thereof, are the same as those in battery "BA1". The batteries "BA2-BA9" have positive electrodes and solutes as shown in Table 1. In the batteries "BA1 - BA9", each battery has a positive electrode composed of an alkali earth metal oxide as shown in Table 1.

**Table 1**

| Battery | Positive electrode | Solute | Stopping voltage |
|---|---|---|---|
| BA1 | BaNiO₃ | Ba(ClO₄)₂ | 4.2V |
| BA2 | BaCoO₃ | Ba(ClO₄)₂ | 4.2V |
| BA3 | BaFeO₃ | Ba(ClO₄)₂ | 4.5V |
| BA4 | SrNiO₃ | Sr(ClO₄)₂ | 4.2V |
| BA5 | SrCoO3 | Sr(ClO₄)₂ | 4.2V |
| BA6 | SrFeO₃ | Sr(ClO₄)₂ | 4.5V |
| BA7 | CaCo₂O₄ | Ca(ClO₄)₂ | 4.5V |
| BA8 | CaFeO₃ | Ca(ClO₄)₂ | 4.2V |
| BA9 | CaFeO₂ | Ca(ClO₄)₂ | 4.5V |
| | | | |
| BC1 | LiCoO₂ | LiC10₄ | 4.2V |

### EXAMPLES 10-25

### {Secondary batteries "BA10 - BA25" of the present invention}

All of the elements of batteries "BA10 - BA25", except for the positive electrode and solute thereof, are the same as those in battery "BA1". The batteries "BA10 - BA25" have positive electrodes and solutes as shown in Table 2. In the batteries "BA10 - BA25", each battery has a positive electrode composed of an lanthanoid metal oxide as shown in Table 2.

**Table 2**

| Battery | Positive electrode | Solute | Stopping voltage |
|---|---|---|---|
| BA10 | Ba₂SmNiO₅ | Sm(ClO₄)₂ | 3.6V |
| BA11 | SmMnO₃ | Sm(ClO₄)₂ | 3.4V |
| BA12 | Sm₃Fe₅O₁₂ | Sm(ClO₄)₂ | 3.9V |
| BA13 | EuFeO₃ | Eu(ClO₄)₂ | 3.9V |
| BA14 | BaEu₂NiO₅ | Eu(ClO₄)₂ | 3.6V |
| BA15 | Eu₃Fe₅O₁₂ | Eu(ClO₄)₂ | 3.9V |
| BA16 | EuMnO₃ | Eu(ClO₄)₂ | 3.4V |
| BA17 | Eu_{0.5}Yb_{0.5}Fe₂O₄ | Yb(ClO₄)₂ | 3.9V |
| BA18 | LaNiO₃ | La(ClO₄)₂ | 3.6V |
| BA19 | LaNi_{0.6}Co_{0.4}O₃ | La(ClO₄)₂ | 3.6V |
| BA20 | La₂CoO₄ | La(ClO₄)₂ | 3.6V |
| BA21 | LaMnO_{4.15} | La(ClO₄)₂ | 3.4V |
| BA22 | La₄MnO₁₁ | La(ClO₄)₂ | 3.4V |
| BA23 | LaMnO₃ | La(ClO₄)₂ | 3.4V |
| BA24 | LaMn₇O₁₂ | La(ClO₄)₂ | 3.4V |
| BA25 | LaMnO_{3.15} | La(ClO₄)₂ | 3.4V |
| | | | |
| BC1 | LiCoO₂ | LiC10₄ | 4.2V |

### COMPARATIVE EXAMPLE

All of the elements of battery "BC" used for comparison purpose, except for a positive electrode and a solute thereof, are the same as those in battery "BA1". The battery "BC" has a positive electrode composed of LiCoO₂ and a solute composed of LiClO₄.

### COMPARISON OF CHARGE/DISCHARGE CHARACTERISTICS

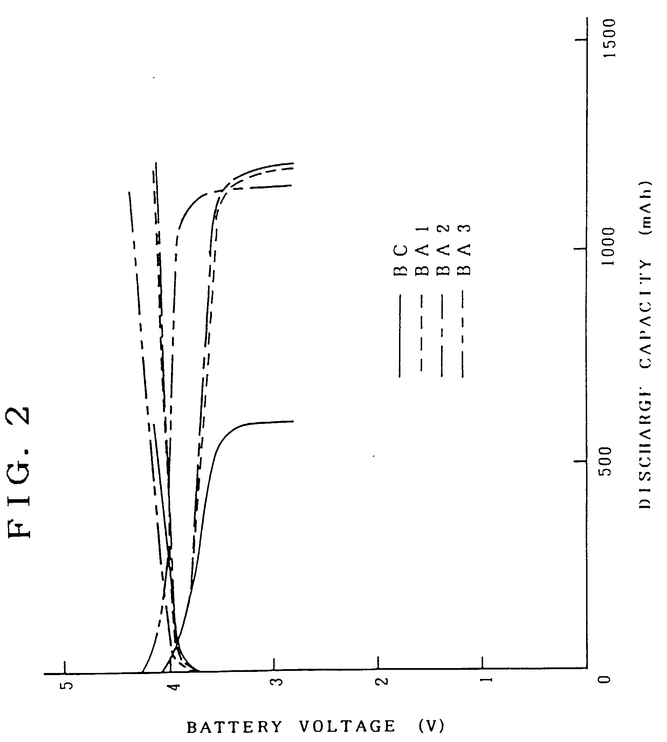

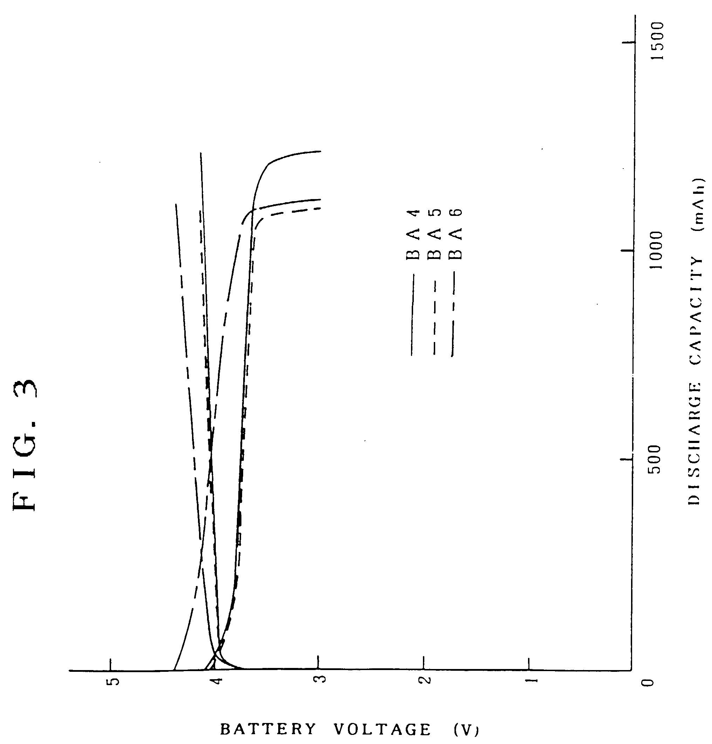

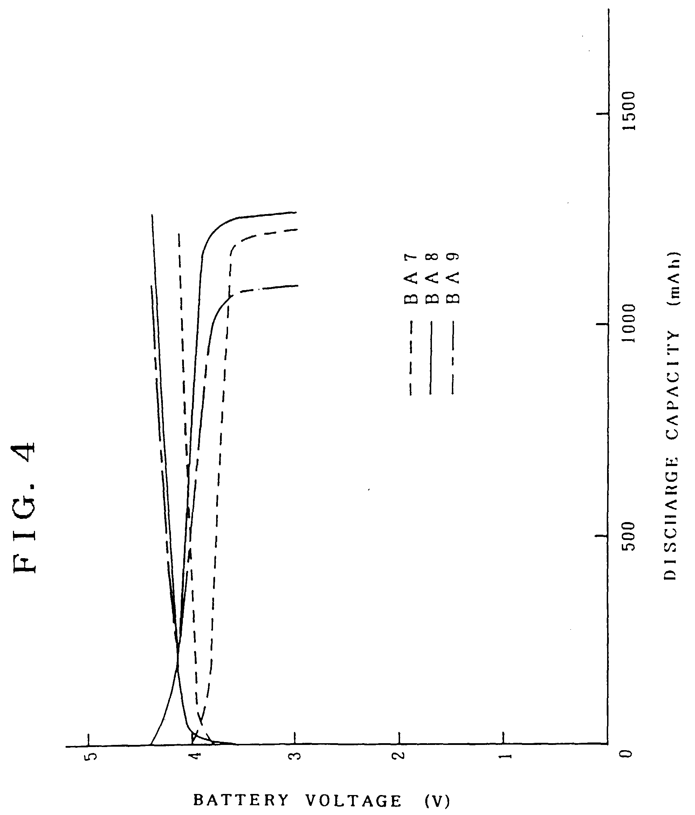

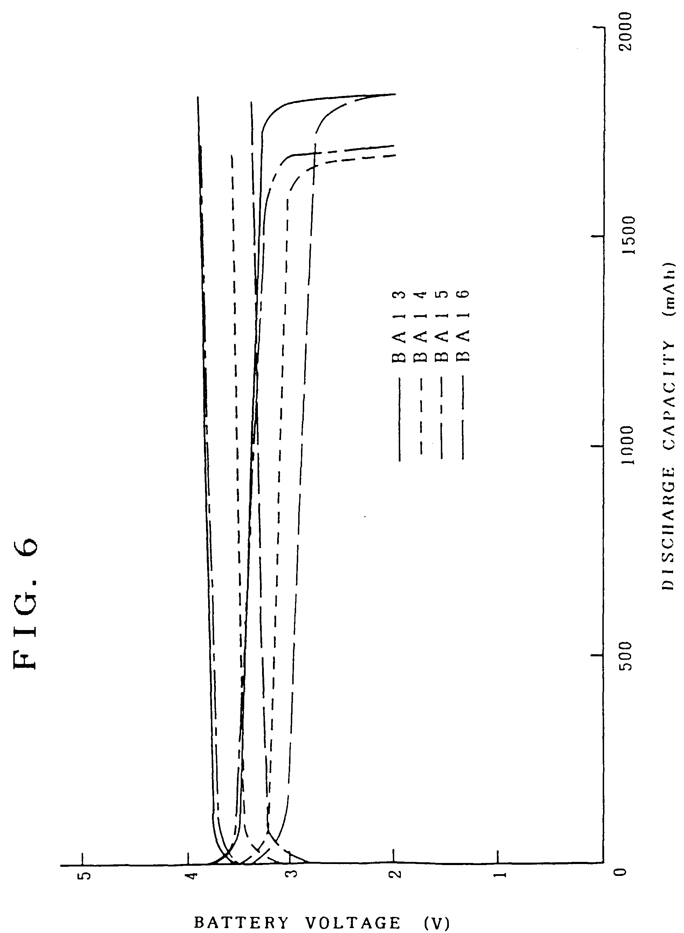

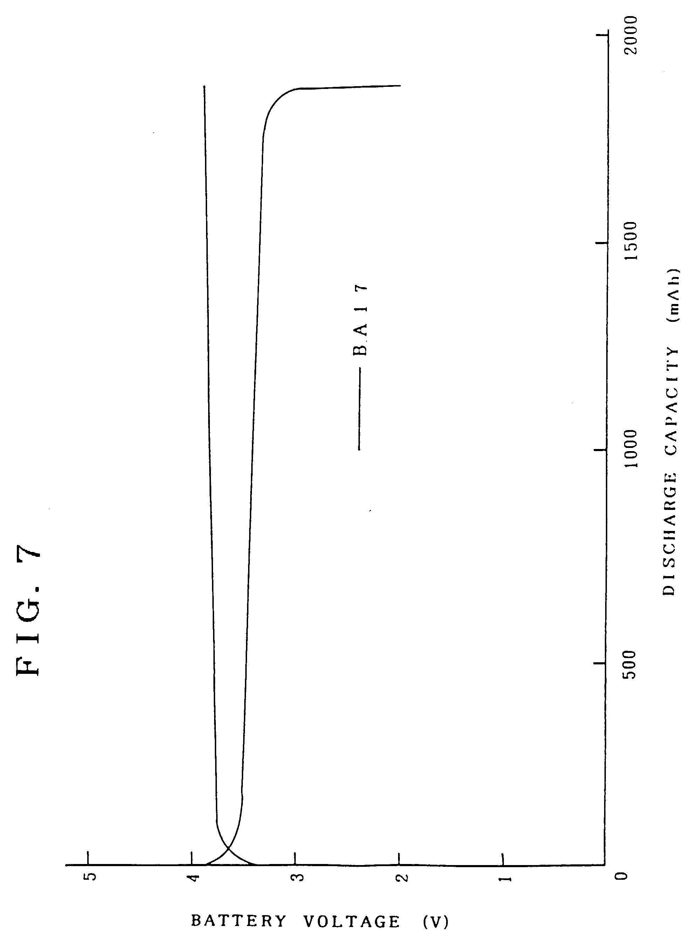

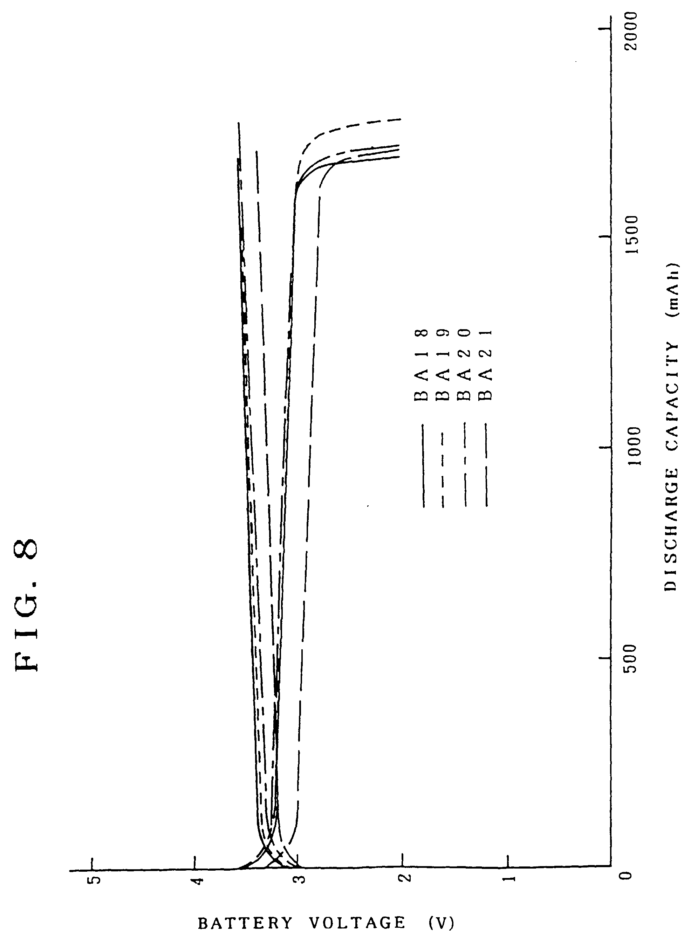

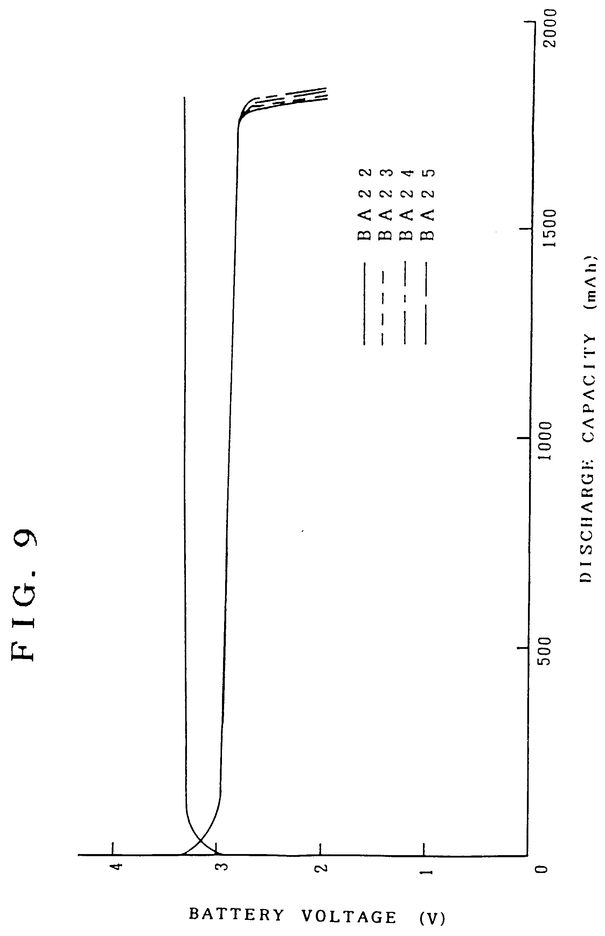

Cycle characteristics of the above described batteries "BA1 - BA9", "BA10 - 25" and "BC" were tested. In the tests, the batteries were charged to a charge stopping voltage shown in Tables 1 and 2 at a charging current of 500 mA. The batteries were then discharged to a discharge stopping voltage of 2.0 V at a discharge current of 500 mA to complete 1 cycle. FIG.2 - FIG.9 show discharge characteristics of the batteries tested. In FIG.2 - FIG.9, the horizontal axis represents battery capacity (mAh) and the vertical axis represents battery discharge voltage (V). In Table 3 and Table 4, average discharge voltages (V) and capacities (mAh) of the batteries are shown.

**Table 3**

| Battery | Average discharge voltage (V) | Discharge capacity (mAh) |
|---|---|---|
| BA1 | 3.7 | 1200 |
| BA2 | 3.7 | 1210 |
| BA3 | 4.0 | 1150 |
| BA4 | 3.7 | 1240 |
| BA5 | 3.7 | 1100 |
| BA6 | 4.0 | 1120 |
| BA7 | 3.7 | 1230 |
| BA8 | 4.0 | 1270 |
| BA9 | 4.0 | 1100 |
| | | |
| BC | 3.7 | 600 |

**Table 4**

| Battery | Average discharge voltage (V) | Discharge capacity (mAh) |
|---|---|---|
| BA10 | 3.1 | 1800 |
| BA11 | 2.9 | 1810 |
| BA12 | 3.4 | 1850 |
| BA13 | 3.4 | 1840 |
| BA14 | 3.1 | 1700 |
| BA15 | 3.4 | 1720 |
| BA16 | 2.9 | 1830 |
| BA17 | 3.4 | 1870 |
| BA18 | 3.1 | 1700 |
| BA19 | 3.1 | 1880 |
| BA20 | 3.1 | 1815 |
| BA21 | 2.9 | 1805 |
| BA22 | 2.9 | 1810 |
| BA23 | 2.9 | 1820 |
| BA24 | 2.9 | 1835 |
| BA25 | 2.9 | 1830 |
| | | |
| BC | 3.7 | 600 |

According to FIG.2 - FIG.4 and Table 3, the batteries "BA1 - BA9" using alkali earth metal ions for an ion conductive material have approximately twice the capacity of the battery "BC" used for comparison.

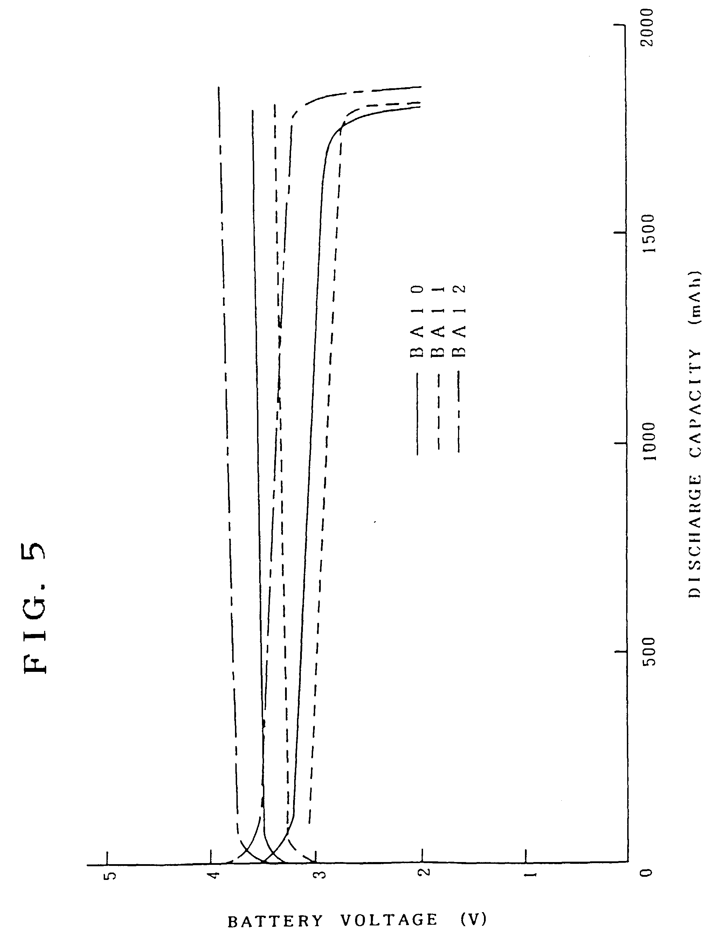

Furthermore, according to FIG.5 - FIG.9 and Table 4, the batteries "BA10 - BA25" using lanthanoid metal ions for an ion conductive material have approximately three times the capacity of the battery "BC".

In the above described embodiments, the batteries have a cylindrical shape. However, it should be appreciated that a coin shaped battery or a flat shaped battery are similarly available.

While the description above refers to particular embodiments of the present invention, it will be understood that many modifications may be made.

The presently disclosed embodiments are therefore to be considered in all respects as illustrative and not restrictive, the scope of the invention being determined by the appended claims, rather than the foregoing description, and all changes which come within the meaning and range of equivalency of the claims are therefore intended to be embraced therein.

## Claims

1. A secondary battery comprising:
a positive electrode having a material intercalating alkali earth metal ions reversibly;
a negative electrode having a carbon composition intercalating alkali earth metal ions reversibly; and
an electrolyte having an organic solvent and a solute, said solute including an alkali earth metal salt, wherein
(i) said material is selected from a group consisting of BaNiO₃, BaNiO₂, BaCoO₃, BaCoO_{2.8}, BaFeO₃, SrNiO₃, SrCoO_{2.5}, SrCoO_{2.8}, SrCoO₃, SrFeO₄, SrFeO_{2.5}, SrFeO₃, CaCo₂O₄, Ca₃Co₄O₉, Ca₂Co₂O₅, Ca₃Co₂O₆, CaFeO₃, CaFeO₂, MgNiO₂, MgCo₂O₄ and MgFe₂O₄;
(ii) said solute is selected from a group consisting of Ba(BF₄)₂, Ba(CF₃SO₃)₂, Ba(PF₆)₂, Ba(ClO₄)₂, Ba(AsF₆)₂, Ba(SbF₆)₂, Sr(BF₄)₂, Sr(CF₃SO₃)₂, Sr(PF₆)₂, Sr (ClO₄)₂, Sr(AsF₆)₂, Sr(SbF₆)₂, Ca(BF₄)₂, Ca(CF₃SO₃)₂, Ca(PF₆)₂, Ca(ClO₄)₂, Ca(AsF₆)₂, Ca(SbF₆)₂, Mg(BF₄)₂, Mg(CF₃SO₃)₂, Mg(PF₆)₂, Mg(ClO₄)₂, Mg(AsF₆)₂ and Mg(SbF₆)₂;
(iii) said organic solvent is selected from a group consisting of ethylene carbonate (EC), dimethyl carbonate (DMC) and vinylene carbonate (VC); and
(iv) said carbon composition is selected from a group consisting of coke, refined coke with 99% or more purity, organic compound produced by calcined cellulose, graphite and glassy carbon.

2. A secondary battery, comprising:
a positive electrode having a material intercalating lanthanoid metal ions reversibly;
a negative electrode having a carbon composition intercalating lanthanoid ions reversibly; and
an electrolyte having an organic solvent and a solute, said solute including a lanthanoid metal salt, wherein
(I) said material is selected from a group consisting of BaSmNiO₅, SmMnO₃, Sm₃Fe5O₁₂, BaEu₂NiO₅, EuFeO₃, EuFe₅O₁₂, EuMnO₃, EuYbFe₂O₄, LaNiO₃, La₂CoO₄, LaNi_{0.6}Co_{0.4}O₃, LaMnO_{4.15}, La₄Mn₄O₁₁, LaMnO₃, La Mn₇O₁₂ and LaMnO_{3.15};
(ii) said solute is selected from a group consisting of Sm(BF₄)₃, Sm(CF₃SO₃)₃, Sm(PF₆)₃, Sm(ClO₄)₃, Sm(AsF₆)₃, Sm(SbF₆)₃, Eu(BF₄)₃, Eu(CF₃SO₃)₃, Eu(PF₆)₃, Eu(ClO₄)₃, Eu(AsF₆)₃, Eu(SbF₆)₃, Yb(BF₄)₃, Yb(CF₃SO₃)₃, Yb(PF₆)₃, Yb(ClO₄)₃, Yb(AsF₆)₃, Yb(SbF₆)₃, La(BF₄)₃, La(CF₃SO₃)₃, La(PF₆)₃, La(ClO₄)₃, La(AsF₆)₃ and La(SbF₆)₃;
(iii) said organic solvent is selected from a group consisting of ethylene carbonate (EC), dimethyl carbonate (DMC) and vinylene carbonate (VC); and
(iv) said carbon composition is selected from a group consisting of coke, refined coke with 99% or more purity, organic compound produced by calcined cellulose, graphite and glassy carbon.

3. A secondary battery having an average discharge voltage of about 4.0 V. comprising:
a positive electrode having a material intercalating alkali earth metal ions reversibly, said material being selected from a group consisting of BaFeO₃, SrFeO₃, CaFeO₃ and CaFeO₂;
a negative electrode having a carbon composition intercalating alkali earth metal ions reversibly; and
an electolyte having an organic solvent and a solute, said solute including an alkali earth metal salt, said solute being composed of ClO₄²⁻ ions and cations.

4. A secondary battery according to claim 3 wherein said carbon composition is selected from a group consisting of coke, refined coke with 99% or more purity, organic compound produced by clacined cellulose, graphite and glassy carbon.

5. A secondary battery according to claim 4, wherein said graphite has an average granule size ranging from 1 µm to 30 µm, a "d" value (d₀₀₂) of a crystal face (002) evaluated by x-rays diffraction ranging from 3.35 to 3.40 and a size of crystallite for a c-axis direction tested by x-rays diffraction being larger than 150 Å.

6. A secondary battery according to claim 4, wherein said organic solvent is selected from a group consisting of ethylene carbonate (EC), dimethyl carbonate (DMC) and vinylene carbonate (VC).

7. A secondary battery according to claim 4, wherein said organic solvent is composed of a mixture of ethylene carbonate (EC ) and dimethyl carbonate (DMC).

## Patentansprüche

1. Sekundärbatterie, die folgendes umfaßt:
eine positive Elektrode, die einen Werkstoff enthält, in den Erdalkalimetallionen reversibel interkaliert sind;
eine negative Elektrode, die eine Kohlenstoffzusammensetzung enthält, in die Erdalkalimetallionen reversibel interkaliert sind; und
einen Elektrolyten, der ein organisches Lösungsmittel und einen gelösten Stoff enthält, wobei der gelöste Stoffein Erdalkalimetallsalz enthält, wobei
(i) der Werkstoff aus einer Gruppe ausgewählt wird, die aus BaNiO₃, BaNiO₂, BaCoO₃, BaCoO_{2,8}, BaFeO₃, SrNiO₃, SrCoO_{2,5}, SrCoO_{2,8}, SrCoO₃, SrFeO₄, SrFeO_{2,5}, SrFeO₃, CaCo₂O₄, Ca₃Co₄O₉, Ca₂Co₂O₅, Ca₃Co₂O₆, CaFeO₃, CaFeO₂, MgNiO₂, MgCo₂O₄ und MgFe₂O₄ besteht;
(ii) der gelöste Stoff aus einer Gruppe ausgewählt wird, die aus Ba(BF₄)₂, Ba(CF₃SO₃)₂, Ba(PF₆)₂, Ba(ClO₄)₂, Ba(AsF₆)₂, Ba(SbF₆)₂, Sr(BF₄)₂, Sr(CF₃SO₃)₂, Sr(PF₆)₂, Sr(ClO₄)₂, Sr(AsF₆)₂, Sr(SbF₆)₂, Ca(BF₄)₂, Ca(CF₃SO₃)₂, Ca(PF₆)₂, Ca(ClO₄)₂, Ca(AsF₆)₂, Ca(SbF₆)₂, Mg(BF₄)₂, Mg(CF₃SO₃)₂, Mg(PF₆)₂, Mg(ClO₄)₂, Mg(AsF₆)₂ und Mg(SbF₆)₂ besteht;
(iii) das organische Lösungsmittel aus einer Gruppe ausgewählt wird, die aus Ethylencarbonat (EC), Dimethylcarbonat (DMC) und Vinylencarbonat (VC) besteht; und
(iv) die Kohlenstoffzusammensetzung aus einer Gruppe ausgewählt wird, die aus Koks, aufbereitetem Koks mit einer Reinheit von 99% oder mehr und einem aus kalzinierter Cellulose, Graphit und Glaskohlenstoff hergestellten organischen Produkt besteht.

2. Sekundärbatterie, die folgendes umfaßt:
eine positive Elektrode, die einen Werkstoff enthält, in den Lanthanoidmetallionen reversibel interkaliert sind;
eine negative Elektrode, die eine Kohlenstoffzusammensetzung enthält, in die Lanthanoidionen reversibel interkaliert sind; und
einen Elektrolyten, der ein organisches Lösungsmittel und einen gelösten Stoff enthält, wobei der gelöste Stoff ein Lanthanoidmetallsalz enthält, wobei
(i) der Werkstoff aus einer Gruppe ausgewählt wird, die aus BaSmNiO₅, SmMnO₃, Sm₃Fe₅O₁₂, BaEu₂NiO₅, EuFeO₃, EuFe₅O₁₂, EuMnO₃, EuYbFe₂O₄, LaNiO₃, La₂CoO₄, LaNi_{0,6}Co_{0,4}O₃, LaMnO_{4,15}, La₄Mn₄O₁₁, LaMnO₃, LaMn₇O₁₂ und LaMnO_{3,15} besteht;
(ii) der gelöste Stoffaus einer Gruppe ausgewählt wird, die aus Sm(BF₄)₃, Sm(CF₃SO₃)₃, Sm(PF₆)₃, Sm(ClO₄)₃, Sm(AsF₆)₃, Sm(SbF₆)₃, Eu(BF₄)₃, Eu(CF₃SO₃), Eu(PF₆)₃, Eu(ClO₄)₃, Eu(AsF₆)₃, Eu(SbF₆)₃, Yb(BF₄)₃, Yb(CF₃SO₃)₃, Yb(PF₆)₃, Yb(ClO₄)₃, Yb(AsF₆)₃, Yb(SbF₆)₃, La(BF₄)₃, La(CF₃SO₃)₃, La(PF₆)₃, La(ClO₄)₃, La(AsF₆)₃ und La(SbF₆)₃ besteht;
(iii) das organische Lösungsmittel aus einer Gruppe ausgewählt wird, die aus Ethylencarbonat (EC), Dimethylcarbonat (DMC) und Vinylencarbonat (VC) besteht; und
(iv) die Kohlenstoffzusammensetzung aus einer Gruppe ausgewählt wird, die aus Koks, aufbereitetem Koks mit einer Reinheit von 99% oder mehr und einem aus kalzinierter Cellulose, Graphit und Glaskohlenstoff hergestellten organischen Produkt besteht.

3. Sekundärbatterie mit einer durchschnittlichen Entladespannung von ca. 4,0 V, die folgendes umfaßt:
eine positive Elektrode, die einen Werkstoff enthält, in den Erdalkalimetallionen reversibel interkaliert sind, wobei der Werkstoff aus einer Gruppe ausgewählt wird, die aus BaFeO₃, SrFeO₃, CaFeO₃ und CaFeO₂ besteht;
eine negative Elektrode, die eine Kohlenstoffzusammensetzung enthält, in die Erdalkalimetallionen reversibel interkaliert sind; und
einen Elektrolyten, der ein organisches Lösungsmittel und einen gelösten Stoff enthält, wobei der gelöste Stoffein Erdalkalimetallsalz enthält, wobei der gelöste Stoff aus ClO₄²⁻-Ionen und Kationen besteht.

4. Sekundärbatterie nach Anspruch 3, in der die Kohlenstoffzusammensetzung aus einer Gruppe ausgewählt wird, die aus Koks, aufbereitetem Koks mit einer Reinheit von 99% oder mehr und einem aus kalzinierter Cellulose, Graphit oder Glaskohlenstoff hergestellten organischen Produkt besteht.

5. Sekundärbatterie nach Anspruch 4, in der der Graphit eine durchschnittliche Korngröße zwischen 1 µm und 30 µm, einen durch Röntgendiffraktion bestimmten 'd'-Wert (d₀₀₂) einer Kristallfläche (002) zwischen 3,35 und 3,40 und eine durch Röntgendiffraktion geprüfte Kristallitgröße in Richtung der c-Achse von mehr als 150 Å aufweist.

6. Sekundärbatterie nach Anspruch 4, in der das organische Lösungsmittel aus einer Gruppe ausgewählt wird, die aus Ethylencarbonat (EC), Dimethylcarbonat (DMC) und Vinylencarbonat (VC) besteht.

7. Sekundärbatterie nach Anspruch 4, in der das organische Lösungsmittel aus einer Mischung von Ethylencarbonat (EC) und Dimethylcarbonat (DMC) besteht.

## Revendications

1. Accumulateur auxiliaire comprenant:
une électrode positive possédant une matière dans laquelle viennent s'intercaler de manière réversible des ions de métaux alcalino-terreux;
une électrode négative possédant une composition de carbone dans laquelle viennent s'intercaler de manière réversible des ions de métaux alcalino-terreux; et
un électrolyte possédant un solvant organique et un soluté, ledit soluté comportant un sel de métal alcalino-terreux, dans lequel
(i) ladite matière est choisie parmi un groupe constitué par BaNiO₃, BaNiO₂, BaCoO₃, BaCoO_{2,8}, BaFeO₃, SrNiO₃, SrCoO_{2,5}, SrCoO_{2,8}, SrCoO₃, SrFeO₄, SrFeO_{2,5}, SrFeO₃, CaCo₂O₄, Ca₃Co₄O₉, Ca₂Co₂O₅, Ca₃Co₂O₆, CaFeO₃, CaFeO₂, MgNiO₂, MgCo₂O₄ et MgFe₂O₄;
(ii) ledit soluté est choisi parmi un groupe constitué par Ba(BF₄)₂, Ba(CF₃SO₃)₂, Ba(PF₆)₂, Ba(ClO₄)₂, Ba(AsF₆)₂, Ba(SbF₆)₂, Sr(BF₄)₂, Sr(CF₃SO₃)₂, Sr(PF₆)₂, Sr(ClO₄)₂, Sr(AsF₆)₂, Sr(SbF₆)₂, Ca(BF₄)₂, Ca(CF₃SO₃)₂, Ca(PF₆)₂, Ca(ClO₄)₂, Ca(AsF₆)₂, Ca(SbF₆)₂, Mg(BF₄)₂, Mg(CF₃SO₃)₂, Mg(PF₆)₂, Mg(ClO₄)₂, Mg(AsF₆)₂ et Mg(SbF₆)₂;
(iii) ledit solvant organique est choisi parmi un groupe constitué par le carbonate d'éthylène (EC), le carbonate de diméthyle (DMC) et le carbonate de vinylène (VC); et
(iv) ladite composition de carbone est choisie parmi un groupe constitué par le coke, du coke raffiné possédant une pureté de 99% ou plus, un composé organique obtenu par calcination de cellulose, du graphite et du carbone potassique.

2. Accumulateur auxiliaire comprenant:
une électrode positive possédant une matière dans laquelle viennent s'intercaler de manière réversible des ions de lanthanides;
une électrode négative possédant une composition de carbone dans laquelle viennent s'intercaler de manière réversible des ions de lanthanides; et
un électrolyte possédant un solvant organique et un soluté, ledit soluté comportant un sel de lanthanides, dans lequel
(i) ladite matière est choisie parmi un groupe constitué par BaSmNiO₅, SmMnO₃, Sm₃Fe₅O₁₂, BaEu₂NiO₅, EuFeO₃, EuFe₅O₁₂, EuMnO₃, EuYbFe₂O₄, LaNiO₃, La₂CoO₄, LaNi_{0,6}Co_{0,4}O₃, LaMnO_{4,15}, La₄Mn₄O₁₁, LaMnO₃, LaMn₇O₁₂ et LaMnO_{3,15};
(ii) ledit soluté est choisi parmi un groupe constitué par Sm(BF₄)₃, Sm(CF₃SO₃)₃, Sm(PF₆)₃, Sm(ClO₄)₃, Sm(AsF₆)₃, Sm(SbF₆)₃, Eu(BF₄)₃, Eu(CF₃SO₃)₃, Eu(PF₆)₃, Eu(ClO₄)₃, Eu(AsF₆)₃, Eu(SbF₆)₃, Yb(BF₄)₃, Yb(CF₃SO₃)₃, Yb(PF₆)₃, Yb(ClO₄)₃, Yb(AsF₆)₃, Yb(SbF₆)₃, La(BF₄)₃, La(CF₃SO₃)₃, La(PF₆)₃, La(ClO₄)₃, La(AsF₆)₃ et La(SbF₆)₃;
(iii) ledit solvant organique est choisi parmi un groupe constitué par le carbonate d'éthylène (EC), le carbonate de diméthyle (DMC) et le carbonate de vinylène (VC); et
(iv) ladite composition de carbone est choisie parmi un groupe constitué par le coke, du coke raffiné possédant une pureté de 99% ou plus, un composé organique obtenu par calcination de cellulose, du graphite et du carbone potassique.

3. Accumulateur auxiliaire possédant une tension de décharge moyenne d'environ 4,0 V, comprenant:
une électrode positive possédant une matière dans laquelle viennent s'intercaler de manière réversible des ions de métaux alcalino-terreux, ladite matière étant choisie parmi un groupe constitué par BaFeO₃, SrFeO₃, CaFeO₃ et CaFeO₂;
une électrode négative possédant une composition de carbone dans laquelle viennent s'intercaler de manière réversible des ions de métaux alcalino-terreux; et
un électrolyte possédant un solvant organique et un soluté, ledit soluté comportant un sel de métal alcalino-terreux, ledit soluté étant composé d'ions ClO₄²⁻ et de cations.

4. Accumulateur auxiliaire selon la revendication 3, dans lequel ladite composition de carbone est choisie parmi un groupe constitué par le coke, du coke raffiné possédant une pureté de 99% ou plus, un composé organique obtenu par calcination de cellulose, du graphite et du carbone potassique.

5. Accumulateur auxiliaire selon la revendication 4, dans lequel ledit graphite possède une granulométrie moyenne se situant dans le domaine de 1 µm à 30 µm, une valeur "d" (d₀₀₂) d'un faciès cristallin (002) évaluée par diffraction des rayons X se situant dans le domaine de 3,35 à 3,40 et une dimension de cristallite dans la direction de l'axe c déterminée par diffraction des rayons X, supérieure à 150 angströms.

6. Accumulateur auxiliaire selon la revendication 4, dans lequel ledit solvant organique est choisi parmi un groupe constitué par le carbonate d'éthylène (EC), le carbonate de diméthyle (DMC) et le carbonate de vinylène (VC).

7. Accumulateur auxiliaire selon la revendication 4, dans lequel ledit solvant organique est composé d'un mélange de carbonate d'éthylène (EC) et de carbonate de diméthyle (DMC).
